# EUROPÄISCHE PATENTANMELDUNG

(11) **EP 1 092 522 A2**
(43) Veröffentlichungstag der Anmeldung: **18.04.2001**
(21) Anmeldenummer: 00119658.3
(22) Anmeldetag: 08.09.2000
(51) Int. Cl.: B29C 45/14, B29C 45/16

(54) **Verfahren zur Herstellung von Kunststofferzeugnissen aus zwei komponenten**

(30) Priorität: 16.10.1999 DE 19950039
(71) Anmelder: Bayerische Motoren Werke Aktiengesellschaft, 80809 München (DE)
(72) Erfinder: Roth, Bruno, 84036 Landshut (DE); Melzl, Bernhard, 84095 Furth (DE); Killermann, Robert, 84036 Landshut (DE); Jäger, Arnulf, 84028 Landshut (DE)

(57) **Zusammenfassung**

Die Erfindung betrifft ein Herstellverfahren für ein aus zumindest zwei Komponenten (1,2) bestehendes Kunststoff-Spritzguß-Bauteil aus unterschiedlichen insbesondere thermoplastischen Kunststoffmaterialien, von welchem zunächst die erste Komponente (1) in einem ersten Spritzgießwerkzeug (3) hergestellt und dabei mit zumindest einem einen Hinterschnittbereich (6) bildenden Vorsprung (11) versehen wird, und von welchem Bauteil anschließend in einem zweiten Spritzgießwerkzeug (4) die zweite Komponente (2) durch Anspritzen an die erste Komponente (1) geformt wird, wobei die zweite Komponente (2) den an der ersten Komponente (1) vorgesehenen Vorsprung (11) im Hinterschnittbereich (6) derart hintergreift, daß sich dieser Vorsprung (11) mit seinem freien Ende (11a) bündig an die Außenfläche (5) der zweiten Komponente (2) anschließt. Erfindungsgemäß wird der Vorsprung (11) im ersten Spritzgießwerkzeug (3) derart geformt, daß er mit seinem freien Ende (11a) durch das zweite Spritzgießwerkzeug (4) geringfügig in den Hinterschnittbereich (6) hinein gedrückt wird. Hierdurch wird ein gratfreier Übergang zwischen der ersten und der zweiten Komponente geschaffen.

## Beschreibung

Die Erfindung betrifft ein Herstellverfahren für ein aus zumindest zwei Komponenten bestehendes Kunststoff-Spritzguß-Bauteil aus unterschiedlichen insbesondere thermoplastischen Kunststoffmaterialien, von welchem zunächst die erste Komponente in einem ersten Spritzgießwerkzeug hergestellt und dabei mit zumindest einem einen Hinterschnittbereich bildenden Vorsprung versehen wird, und von welchem Bauteil anschließend in einem zweiten Spritzgießwerkzeug die zweite Komponente durch Anspritzen an die erste Komponente geformt wird, wobei die zweite Komponente den an der ersten Komponente vorgesehenen Vorsprung im Hinterschnittbereich derart hintergreift, daß sich dieser Vorsprung mit seinem freien Ende bündig an die Außenfläche der zweiten Komponente anschließt. Ferner betrifft die Erfindung ein nach dem Herstellverfahren gemäß Anspruch 1 hergestelltes, zumindest bereichsweise flächiges Bauteil. Zum technischen Umfeld wird neben der DE 43 04 751 C2 auf die DE 34 13 721 A1 verwiesen.

Die erstgenannte Schrift zeigt ein aus zwei Komponenten bestehendes Kunststoff-Spritzguß-Bauteil, bei welchem die erste Komponente die Vorderseite und die zweite Komponente die Rückseite des Bauteiles bildet. Ein solches Bauteil kann jedoch auch anders gestaltet sein, nämlich derart, daß die beiden Komponenten in einer Fläche nebeneinander liegen. Eine derartige Gestaltung wird bspw. dann gewählt, wenn die beiden Komponenten eine unterschiedliche Härte aufweisen sollen und sich die jeweiligen Kunststoffmassen in ihrer Viskosität unterscheiden. Verallgemeinert wird eine derartige Gestaltung dann gewählt, wenn zwei aneinander angrenzende Flächenabschnitte des Bauteiles aus sich hinsichtlich ihrer Eigenschaften unterscheidenden Kunststoffmassen bestehen sollen, so wie dies bspw. in der eingangs zweitgenannten Schrift gezeigt ist.

Um den Übergangsbereich zwischen den beiden in einer Fläche nebeneinander liegenden Komponenten möglichst stabil und gefällig zu halten, kann in diesem Abschnitt ein sog. Hinterschnittbereich sein vorgesehen, der durch zumindest einen an die erste Komponente angeformten Vorsprung gebildet wird, hinter den dann die zweite Komponente hinterspritzt wird. Der sog. Hinterschnittbereich ist somit eine vom genannten Vorsprung sowie von einer Wand der einen Komponente begrenzte Nut, in die die zweite Komponente hineinragt. Am freien Ende des Vorsprungs grenzt die erste Komponente dann direkt an die zweite Komponente an, d.h. es liegt ein Übergang zwischen der ersten und der zweiten Komponente vor, wobei dieser Übergangsbereich möglichst gratfrei ausgebildet sein soll. Beim Anspritzen der zweiten Komponente an die bereits gefertigte erste Komponente soll sich insbesondere im Bereich des freien Endes des genannten Vorsprunges an der zweiten Komponente kein Grat bilden. Dies ist mit den bekannten Technologien jedoch praktisch nicht möglich, so daß im bekannten Stand der Technik bei einer derartigen Ausbildung stets eine gewisse Nacharbeit erforderlich ist, um den an dieser Stelle bislang unvermeidbaren Grat zu entfernen.

Eine Maßnahme aufzuzeigen, mit Hilfe derer beim Herstellverfahren eines derartigen Kunststoff-Spritzguß-Bauteiles nach dem Oberbegriff des Anspruchs 1 die besagte Gratbildung vermieden wird, ist Aufgabe der vorliegenden Erfindung.
Die Lösung dieser Aufgabe ist dadurch gekennzeichnet, daß der Vorsprung im ersten Spritzgießwerkzeug derart geformt wird, daß er mit seinem freien Ende durch das zweite Spritzgießwerkzeug geringfügig in den Hinterschnittbereich hinein gedrückt wird. Im zweiten Patentanspruch ist eine besonders vorteilhafte Weiterbildung an einem nach diesem Herstellverfahren gefertigten Kunststoff-Spritzguß-Bauteil angegeben.

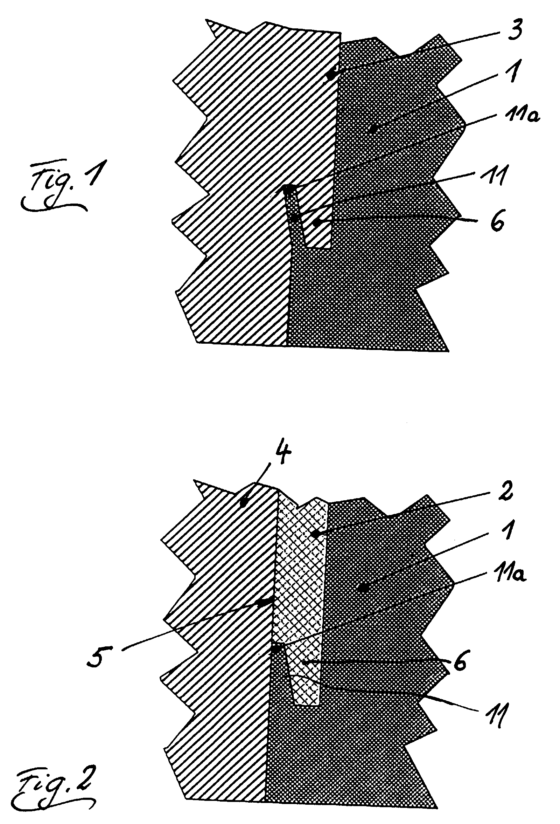

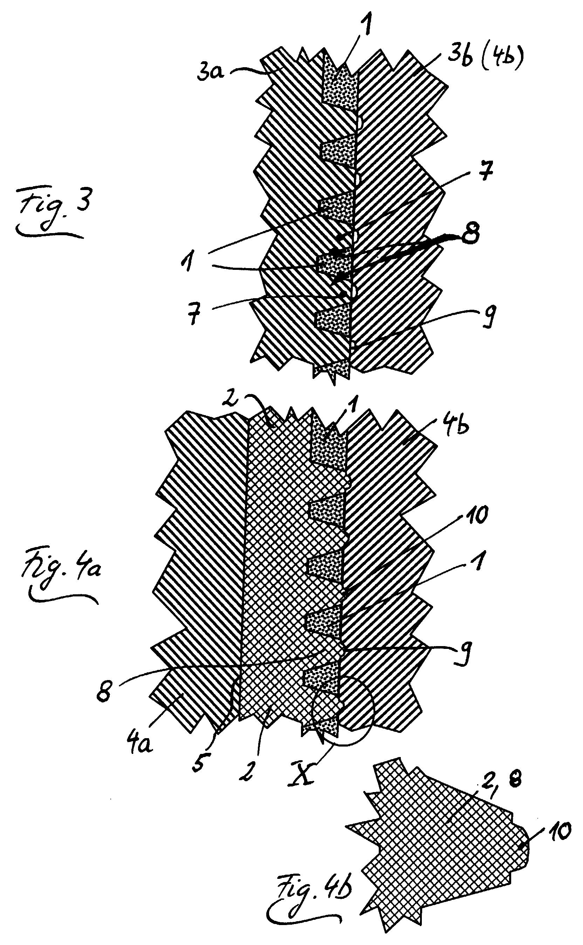

Am besten läßt sich die Erfindung anhand eines in den beigefügten **Figuren 1** bis **4** abstrakt dargestellten, bevorzugten Ausführungsbeispieles beschreiben, da eine zeichnerische Darstellung für die vorliegende Erfindung besonders aussagekräftig ist. Ausdrücklich sei jedoch darauf hingewiesen, daß selbstverständlich auch andere Gestaltungen als im folgenden beschrieben möglich sind. Im einzelnen zeigen die beigefügten **Figuren 1**, **2** die wesentlichen Herstellschritte für ein erfindungsgemäß gefertigtes Kunststoff-Spritzguß-Bauteil im Bereich des genannten Vorsprunges bzw. Hinterschnittbereiches, während in den **Figuren 3, 4** ein vorteilhaft gestalteter, abseits des Bereiches der Figuren 1, 2 liegender Abschnitt dieses Bauteiles während des Herstellungsprozesses dargestellt ist.

Mit der Bezugsziffer 1 ist die erste Komponente und mit der Bezugsziffer 2 die zweite Komponente eines zumindest aus diesen beiden Komponenten 1, 2 bestehenden Kunststoff-Spritzguß-Bauteiles bezeichnet. Gefertigt wird dieses Bauteil dadurch, daß zunächst die erste Komponente 1 in einem ersten Spritzgießwerkzeug 3, von welchem in **Figur 1** lediglich eine der beiden Formhälften dargestellt ist, durch Kunststoff-Spritzgießen hergestellt wird. Anschließend daran wird - wie in **Figur 2** stark vereinfacht dargestellt - die zweite Komponente 2 in einem zweiten Spritzgießwerkzeug 4, von welchem ebenfalls lediglich eine der beiden Formhälften dargestellt ist, durch Anspritzen einer anderen Kunststoffmasse an die erste Komponente 1 hergestellt.

Wie **Figur 2** zeigt, liegen die beiden Komponenten 1, 2 in einer sog. Außenfläche 5, die gleichzeitig durch die freie Stirnfläche des zweiten Spritzgießwerkzeuges 4 gebildet wird, bündig nebeneinander. Im diesem sog. Übergangsbereich zwischen der ersten Komponente 1 und der zweiten Komponente 2 ist ein sog. Hinterschnittbereich 6 vorgesehen, in welchem die zweite Komponente 2 einen an der ersten Komponente 1 vorgesehenen Vorsprung 11 hintergreift, d.h. die zweite Komponente 2 ragt mit einem nicht näher bezeichneten Fortsatz in den im wesentlichen nutförmigen, vom Vorsprung 11 sowie von der Seitenwand der Komponente 1 begrenzten Hinterschnittbereich 6 hinein. Insbesondere wenn das die zweite Komponente 2 bildende Kunststoffmaterial relativ niedrigviskos ist, kann sich beim Formen dieser zweiten Komponente 2 in dem genannten Übergangsbereich zwischen der ersten Komponente 1 bzw. dem freien Ende von dessen Vorsprung 11 und der zweiten Komponente 2 ein unschöner Grat bilden.

Um eine derartige unerwünschte Gratbildung zu vermeiden, wird beim Herstellen der ersten Komponente 1 (vgl. **Figur 1**) im ersten Spritzgießwerkzeug 3 der Vorsprung 11 derart geformt, daß er beim nachfolgenden Herstellschritt der zweiten Komponente 2 im zweiten Spritzgießwerkzeug 4 mit seinem freien Ende 11a durch das zweite Spritzgießwerkzeug 4 (bzw. durch die die Außenfläche 5 formende Stirnseite desselben) geringfügig in den Hinterschnittbereich 6 hinein gedrückt wird. Dieser Vorsprung 6 wirkt somit quasi als elastische Dichtlippe im Übergangsbereich zwischen den beiden Komponenten 1, 2. Diese Dichtlippe bzw. dieser Vorsprung 11 ist also derart ausgebildet, daß sie bzw. er sich sowohl beim Herstellprozess der ersten Komponente 1 als auch beim Abdichten im zweiten Herstellverfahrensschritt, nämlich beim Anspritzen der zweiten Komponente 2, elastisch verformt. Über diese elastische Verformung wird sichergestellt, daß das (hier bevorzugt niedrigviskose) die zweite Komponente 2 bildende Kunststoffmaterial im sichtbaren Übergangsbereich zwischen den beiden Komponenten 1, 2 auf der Außenfläche 5 eine saubere Trennlinie zum Material der ersten Komponente 1 hin bildet, Da dadurch in diesem sog. Übergangsbereich keine Gratbildung an der zweiten Komponente 2 auftritt, wird selbstverständlich ein optimales Erscheinungsbild ohne aufwendige Zusatzmaßnahmen geschaffen.

Wie **Figur 1** zeigt, wird zur Erzielung des gewünschten Effektes, nämlich daß der Vorsprung 11 der ersten Komponente 1 im bzw. durch das zweite(n) Spritzgießwerkzeug 4 zumindest mit seinem freien Ende 11a geringfügig in den Hinterschnittbereich 6 hinein gedrückt wird, dieser Vorsprung 11 im ersten Spritzgießwerkzeug 3 derart geformt, daß er mit seinem freien Ende 11a von diesem Hinterschnittbereich 6 weggerichtet ist. Dieser Sachverhalt läßt sich in anderen Worten ausgedrückt auch so beschreiben, daß der Vorsprung 11 zumindest mit seinem freien Ende 11a zunächst von der (später entstehenden gemeinsamen) Außenfläche 5 der beiden Komponenten 1, 2, absteht bzw. von dieser Außenfläche 5 abstehend vom (später entstehenden) Kunststoff-Spritzguß-Bauteil weggerichtet ist. Dabei wird jedoch - wie bereits beschrieben - im zweiten Verfahrensschritt der Vorsprung 11 durch das zweite Spritzgießwerkzeug 4 wieder in die Ebene der (gemeinsamen) Außenfläche 5 hineingedrückt und schließlich durch das die zweite Komponente 2 bildende Kunststoffmaterial nach Erstarren desselben durch Materialverbindung weitestgehend in dieser Ebene der Außenfläche 5 gehalten, so daß das vollständige Kunststoff-Spritzguß-Bauteil auch nach Entnahme aus dem zweiten Spritzgießwerkzeug 4 praktisch so aussieht wie in **Figur 2** dargestellt.

An einem solchermaßen hergestellten, zumindest bereichsweise flächigen Bauteil ist die im folgenden beschriebene vorteilhafte Weiterbildung möglich, die ebenfalls mittels geeignet gestalteter Spritzgießwerkzeuge 3, 4 umsetzbar ist. **Figur 3** zeigt einen Bereich, der abseits desjenigen der Figuren 1, 2 liegt, und in dem an der (hier linken) Formhälfte 3a des ersten Spritzgießwerkzeuges 3 an deren dem Formhohlraum zugewandten Oberfläche mehrere sog. Dorne 7 vorgesehen sind, durch welche beim Herstellprozeß der ersten Komponente 1 in dieser sog. Durchbrüche 8 geschaffen werden, nachdem sich die Dorne 7 bis zur anderen (hier rechten) Formhälfte 3b des ersten Spritzgießwerkzeuges 3 erstrecken.

Wird nun die so vorgeformte erste Komponente 1 in das zweite Spritzgießwerkzeug 4 eingelegt, von dem in **Figur 4a** die beiden Formhälften 4a und 4b dargestellt sind, so werden mit dem Anspritzen der zweiten Komponente 2, deren Außenseite 5 dann bspw. die Vorderseite des (fertigen) Bauteiles bildet, auch die Durchbrüche 8 mit diesem die zweite Komponente 2 bildenden Kunststoffmaterial ausgefüllt. Ferner weist wie ersichtlich die der ersten Komponente 1 zugewandte Oberfläche der (hier rechten) Formhälfte 4b des zweiten Spritzgießwerkzeuges 4 in den Bereichen der Durchbrüche 8 kugelsegmentförmige Aussparungen 9 auf. Auch diese werden hierbei mit dem Kunststoffmaterial ausgefüllt, so daß auf dieser der Außenfläche 5 gegenüberliegenden bspw. Rückseite des somit fertigen Bauteiles anschließend an die Durchbrüche 8 sog. Noppen 10 ausgebildet werden. Diese Noppen 10, die aus **Figur 4b**, die den Ausschnitt X aus **Figur 4a** vergrößert zeigt, klar ersichtlich sind, können bspw. als Rutschverhinderer für auf diese Rückseite des Bauteiles aufgelegte Gegenstände wirken, insbesondere wenn es sich bei dem die zweite Komponente 2 bildenden Kunststoffmaterial um ein relativ weiches und niedrigviskoses Material handelt.

Mittels der beiden Spritzgießwerkzeuge 3 und 4 lassen sich an dem zu fertigenden und aus den beiden Komponenten 1, 2 bestehenden Bauteil somit äußerst vorteilhafte und dabei die Produktqualität steigernde Maßnahmen umsetzen, wobei darauf hingewiesen sei, daß durchaus eine Vielzahl von Details abweichend vom gezeigten Ausführungsbeispiel gestaltet sein kann, ohne den Inhalt der Patentansprüche zu verlassen.

### Bezugszeichenhiste:

- 1: erste Komponente des Kunststoff-Spritzguß-Bauteiles
- 11: Vorsprung (an 1)
- 11a: freies Ende von 11
- 2: zweite Komponente des Kunststoff-Spritzguß-Bauteiles
- 3: erstes Spritzgießwerkzeug
- 3a,b: Formhälften von 3
- 4: zweites Spritzgießwerkzeug
- 4a,b: Formhälften von 4
- 5: Außenfläche
- 6: Hinterschnittbereich
- 7: Dorn
- 8: Durchbruch
- 9: Aussparung
- 10: Noppe

## Patentansprüche

1. Herstellverfahren für ein aus zumindest zwei Komponenten (1, 2) bestehendes Kunststoff-Spritzguß-Bauteil aus unterschiedlichen insbesondere thermoplastischen Kunststoffmaterialien, von welchem zunächst die erste Komponente (1) in einem ersten Spritzgießwerkzeug (3) hergestellt und dabei mit zumindest einem einen Hinterschnittbereich (6) bildenden Vorsprung (11) versehen wird, und von welchem Bauteil anschließend in einem zweiten Spritzgießwerkzeug (4) die zweite Komponente (2) durch Anspritzen an die erste Komponente (1) geformt wird, wobei die zweite Komponente (2) den an der ersten Komponente (1) vorgesehenen Vorsprung (11) im Hinterschnittbereich (6) derart hintergreift, daß sich dieser Vorsprung (11) mit seinem freien Ende (11a) bündig an die Außenfläche (5) der zweiten Komponente (2) anschließt, dadurch gekennzeichnet, daß der Vorsprung (11) im ersten Spritzgießwerkzeug (3) derart geformt wird, daß er mit seinem freien Ende (11a) durch das zweite Spritzgießwerkzeug (4) geringfügig in den Hinterschnittbereich (6) hinein gedrückt wird.

2. Nach dem Herstellverfahren gemäß Anspruch 1 hergestelltes, zumindest bereichsweise flächiges Bauteil, an welchem in der ersten Komponente (1) mehrere mittels des ersten Spritzgießwerkzeuges (3) erzeugte Durchbrüche (8) vorgesehen sind, die vom Kunststoffmaterial der zweiten Komponente (2) derart ausgefüllt werden, daß diese die Vorderseite des flächigen Bauteil-Bereiches darstellende zweite Komponente (2) auf der Rückseite über die Durchbrüche (8) gebildete Noppen (10) aufweist.
